# NOUVEAU FASCICULE DE BREVET EUROPEEN

(11) **EP 0 786 126 B2**
(45) Date de publication et mention de la décision concernant l'opposition: **30.11.2005**
(45) Mention de la délivrance du brevet: 22.07.1998
(21) Numéro de dépôt: 95934695.8
(22) Date de dépôt: 12.10.1995
(51) Int. Cl.: G07F 17/30, G11B 27/00

(54) **METHODE ET SYSTEME DE DISTRIBUTION ET DE SELECTION D'INFORMATIONS AUDIO OU VIDEO**
AUSWAHL- UND VERTEILSYSTEM FÜR AUDIO- UND VIDEOINFORMATIONEN UND VERFAHREN
METHOD AND SYSTEM FOR DISTRIBUTING AND SELECTING AUDIO AND VIDEO INFORMATION

(30) Priorité: 12.10.1994 WO PCT/FR94/01185
(43) Date de publication de la demande: 30.07.1997
(73) Titulaire: TOUCHTUNES MUSIC CORPORATION, Las Vegas, NV 89104 (US)
(72) Inventeur: NATHAN, Guy, F-91330 Yerres (FR); MASTRONARDI, Tony, Pierrefonds, Québec H8Y 3L2 (CA)
(74) Mandataire: Debay, Yves
(86) Numéro de dépôt international: PCT/FR1995/001338
(87) Numéro de publication internationale: WO 1996/012261

(56) Documents cités:
- EP-A- 0 082 077
- WO-A-90/07843
- DE-A- 3 820 835

## Description

La présente invention concerne un système de distribution et de sélection d'informations audio ou vidéo sur un réseau et le procédé mis en oeuvre par le système.

Il est connu par la demande de brevet britannique 2166328 un dispositif de distribution d'informations audio ou vidéo sur un réseau à câble coaxial nécessitant un bus spécifique de type ISDN constituant un réseau téléphonique et un bus de communication pour les autres appareils, ledit bus de communication comportant des boîtiers de télécommande associés chacun à un dispositif adaptateur connecté au bus.

Un tel réseau présente l'inconvénient de nécessiter le câblage de plusieurs réseaux, un premier câblage de type coaxial, un deuxième câblage pour le réseau téléphonique type ISDN et enfin un troisième câblage pour le bus de contrôle de communication.

Une autre demande de brevet européen 140593 a l'avantage de pallier ces inconvénients en utilisant le seul réseau coaxial pour distribuer des informations audio provenant d'une unité juke-box en utilisant sur le réseau câblé au moins un canal affecté à la transmission des informations audio. Ce canal est divisé en sous canaux et chaque sélection audio est multiplexée en fréquence. Ainsi 75 à 200 canaux audio sont envoyés sur un canal vidéo de 6 MHz de largeur de bande. Une boite de conversion permet de sélectionner chacun des sous canaux et donc à l'utilisateur d'écouter la chanson transportée par ce sous canal. L'inconvénient d'un tel dispositif est que l'utilisateur ne peut pas déterminer le début et la fin de la chanson car toutes les sélections sont interprétées sans interruption le temps d'attente pouvant aller jusqu'à 30 secondes. Un autre inconvénient du dispositif consiste dans le fait qu'il n'est pas possible de transmettre simultanément des informations vidéo et audio selon ce principe. En effet si l'on veut transmettre des informations vidéo il faut prendre la porteuse principale de chaque canal et dans ce cas, par canal, on ne peut plus transmettre qu'une information vidéo associée à une ou deux informations audio de qualité acceptable parmi lesquelles une de ces deux informations audio correspond à celle associée à l'information vidéo. Ainsi si l'on veut transmettre les informations vidéo correspondant à 200 sélections on arrivera très rapidement à saturer et à occuper tous les canaux disponibles. Dans un tel cas la transmission des canaux de télévision ne sera plus possible et en tout cas le nombre d'informations audio serait inférieur à 10.

Le but de l'invention est donc de proposer un système de distribution d'informations audio et vidéo utilisant le réseau câblé coaxial de distribution de la télévision, sans empêcher la distribution des émissions de télévision sur ce réseau câblé et en permettant en même temps la distribution d'informations vidéo correspondant aux sélections disponibles sur une unité de juke-box. Le but du système est de permettre également une communication interactive entre l'utilisateur et les sélections disponibles sans avoir à procéder à un câblage spécifique des locaux équipés du système, par utilisation des réseaux existant normalement dans les locaux.

Ce but est atteint par le fait que le système de distribution et de sélection d'informations audio et vidéo sur un réseau coaxial câblé comportant en association une unité juke-box reliée par un modulateur à ce réseau câblé de distribution de la télévision est caractérisé en ce qu'il comporte un canal affecté à la transmission des informations audio ou vidéo ;
des moyens, reliés à un réseau distinct du réseau cablé, interactifs avec le téléviseur, de sélection à distance, d'au moins une information audio ou vidéo du juke-box parmi la pluralité d'informations à transmettre sur le réseau câblé ;
des moyens d'identification des moyens de sélection ou du poste de télévision associé aux moyens de sélection;
des moyens de facturation de l'utilisateur associé à un poste de télévision pour les sélections consommées.

Selon une autre particularité les moyens de sélection sont constitués par le réseau téléphonique et le central associé de type PABX qui délivre à une interface du juke-box des signaux de fréquences vocales exploités par un logiciel d'interface incorporé au juke-box pour interpréter l'enfoncement des touches d'un poste téléphonique comme des événements souris influençant le déplacement d'un marqueur sur des fenêtres d'écran permettant de guider l'utilisateur, lesdits signaux comprenant également une information d'identification

Selon une autre particularité des moyens d'assistance vocale sont prévus pour guider l'utilisateur dans l'actionnement des touches du poste téléphonique.

Selon une autre particularité les moyens de sélections sont constitués par un moyen de commande relié par le réseau électrique à une interface appropriée du juke-box, ladite interface et les moyens de sélection fonctionnant tout deux sur les principes des courants porteurs pour transmettre une information d'identification et les informations de commande correspondant à l'enfoncement des touches de la commande.

Selon une autre particularité le juke-box comporte des moyens de mémorisation de masse, un processeur principal exploitant un système multitâches, un circuit contrôleur vidéo et un circuit contrôleur son, propre au réseau câblé lesdits circuits contrôleurs vidéo et contrôleurs son étant reliés à un modulateur RF de radio fréquence et une interface d'entrée et sortie pour les moyens de sélection à distance.

Selon une autre particularité le juke-box comporte un écran tactile et une interface spécifique à l'écran tactile, un circuit contrôleur son et un circuit contrôleur vidéo d'un dispositif d'affichage propre au juke-box.

Selon une autre particularité le juke-box comporte des moyens monnayeurs.

Selon une autre particularité les moyens de facturation exploitent une base de donnée du juke-box associant au titre sélectionné le coût de la sélection et délivrant à un système de facturation un identifiant de l'utilisateur ainsi que le montant à lui facturer.

Selon une autre particularité l'écran de télévision permet l'affichage d'un tableau de sélections de titres permettant le choix de sélections soit par accès direct du titre ou de l'interprète, soit par la catégorie et sélection dans une liste de la catégorie.

Un autre but de l'invention est de proposer un procédé d'utilisation d'un système de distribution et de sélection ne nécessitant pas de câblage.

Ce but est atteint par le fait que le procédé d'utilisation d'un système de distribution et de sélection d'informations audio ou vidéo constitué d'un réseau câblé de distribution de la télévision auquel est raccordé par un modulateur RF et une carte contrôleur son et une carte contrôleur vidéo une unité juke-box, ladite unité juke-box étant elle-même reliée à un autre réseau soit téléphonique soit électrique par une interface, ledit procédé comportant les étapes :
- d'envoi d'un identifiant du local associé au poste de télévision par soit la ligne téléphonique soit la commande à distance ;
- une étape de sélection d'informations audio ou vidéo à exécuter sur le réseau par l'utilisation d'un clavier et d'une interface interprétant les touches du clavier comme des touches de déplacement d'un curseur;
- une étape de mise dans la file d'attente du juke-box de l'ordre de sélection et d'exécution de l'information audio ou vidéo sélectionnée ;
- une étape d'envoi sur le réseau câblé de cette information ;
- une étape d'envoi dès la validation de la sélection des informations concernant l'identification de l'utilisateur et le coût de la sélection à un système de facturation.

D'autres particularités et avantages de la présente invention apparaîtront plus clairement à la lecture de la description ci-après faite en référence aux dessins annexés dans lesquels :
la figure 1 représente une vue schématique du réseau de distribution des informations audio ou vidéo ;

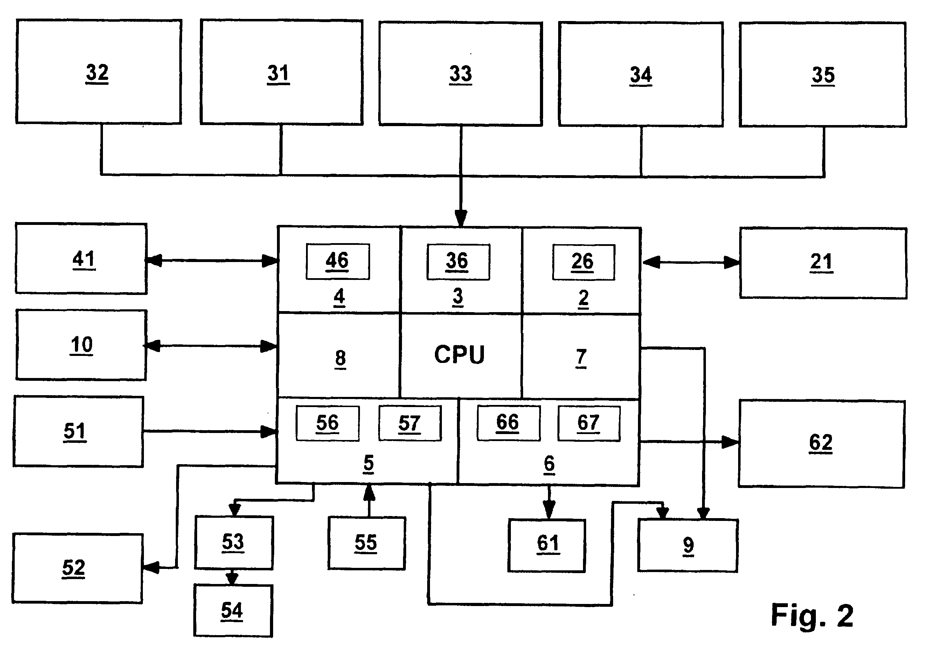

la figure 2 représente le schéma des circuits constituant le juke-box de l'invention ;
la figure 3 représente l'organisation du système multitâches gérant l'ensemble des moyens matériels et logiciels ;
la figure 4 représente un logigramme de description du fonctionnement du système de gestion multitâches ;
la figure 5 représente le logigramme de vérification d'activité des tâches ;
la figure 6 représente le logigramme de mise en file d'attente des sélections ;
la figure 7 représente une deuxième variante de réalisation du réseau selon l'invention.

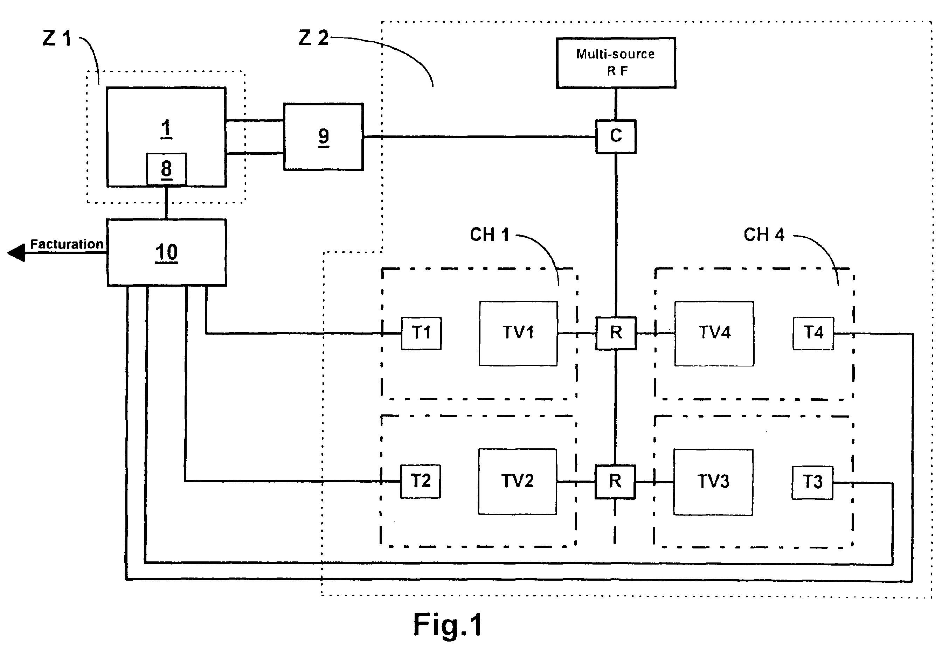

L'invention représentée à la figure 1 est constituée d'une unité juke-box (1) disposée dans un local (Z1). Cette unité juke-box (1) est reliée à un modulateur de fréquences radio (9) lequel est relié à un circuit coupleur C par un câble coaxial. Le circuit coupleur C alimente par un câble coaxial des répartiteurs R qui eux-mêmes sont reliés par des câbles coaxiaux à des postes de télévision (TV1, TV2, TV3, TV4). Le coupleur reçoit également sur une autre de ses entrées par un câble coaxial une alimentation source de fréquences radio permettant la distribution des émissions de télévisionhabituelles. Les téléviseurs sont disposés dans une zone (Z2) dans laquelle chaque téléviseur est implanté, par exemple dans un chambre. Le téléviseur (TV1) est implanté dans la chambre (CH1) et cette chambre (CH1) dispose d'un poste téléphonique (T1) relié par une ligne à un central téléphonique (10) de type PABX. Ce central (10) est lui même relié par une liaison à un ordinateur de facturation. Enfin le central (10) est relié par une liaison à une interface appropriée du juke-box (1). Chaque chambre (CH2, CH3, CH4) comportant un poste de télévision (TV2, TV3, TV4) comporte également un poste téléphonique associé (T2, T3, T4). L'unité juke-box (1) est constituée d'une unité centrale à microprocesseur CPU qui est un système compatible PC de haute performance, le choix lors de la mise en oeuvre s'est porté sur un système du type Intel 80486 DX/2 qui possède des moyens de mémorisation et les caractéristiques suivantes:
- compatibilité avec le bus local Vesa,
- antémémoire du processeur: 256 kO,
- ports série et parallèle de haute performance,
- adaptateur graphique type SVGA à microprocesseur
- contrôleur de bus type SCSI/2,
- mémoire vive RAM statique auto-alimentée de 32 MO.

Tout autre unité centrale possédant des performances équivalentes ou supérieures pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat de 14 ou 15 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,

Des moyens de mémorisation de masse (21) utilisant des disques durs de type SCSI haute vitesse et haute capacité, sont associés aux moyens de mémorisation déjà présents dans le dispositif à microprocesseur. Ces moyens servent au stockage d'informations audiovisuelles numérisées et compressées.

Un adaptateur de modem de télécommunications (41) haute vitesse d'au moins 28,8 kbps est intégré pour autoriser la liaison avec un réseau de distribution d'informations audiovisuelles contrôlé par un serveur central.

L'unité centrale CPU commande et gère également un autre circuit (7) contrôleur de vidéo relié par sa sortie V2 au modulateur de fréquence radio (9) qui est aussi relié à une sortie audio du circuit de commande de son (5) qui est indépendante des contrôles de volume, tonalité et balance.

Pour la reproduction des informations sonores des sélections musicales, le système comporte des haut-parleurs (54) recevant le signal d'un amplificateur - tuner (53) relié au circuit électronique (5) de type synthétiseur de musique prévu pour supporter un grand nombre de sources d'entrée tout en fournissant une sortie présentant une qualité de type CD (disque compact), telle que par exemple l'adaptateur audio multimédia à microprocesseur, du type carte "Sound Blaster" SBP32AWE de chez Creative Labs Inc sur lequel deux tampons mémoire (56, 57) sont ajoutés dans le but explicité ultérieurement.

De même le circuit de commande des moyens de visualisation comporte également deux mémoires tampon (66, 67) dans le but explicité ultérieurement.

De même le circuit contrôleur de vidéo additionnels (7) utilisent ces circuits tampons (66, 67) pour tranférer les informations entre le disque dur et le réseau câblé coaxial.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet après avoir affiché sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

le circuit d'entrée (3) interface également avec le système un ensemble télécommande (31) constitué, par exemple:
- d'une télécommande infrarouge de chez Mind Path Technologies Inc., émetteur qui possède 15 touches de commande pour le système à microprocesseur et 8 touches de commande pour dispositif de projection.
- d'un récepteur infrarouge avec adaptateur série de chez Mind Path Technologies Inc.

Un dispositif de paiement de redevances (35) de chez National Rejectors Inc., est également relié au circuit d'interface d'entrée (3) . Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti avec garnitures extérieures personnalisables.

Outre ces éléments, un microphone (55) est relié au contrôleur de son (5), ce qui permet de transformer ce dernier en un puissant système d'annonces et d'informations destinees au public ou éventuellement en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun de façon alternative une information correspondant à un quart de seconde de son. De même deux tampons (66, 67) sont associés au circuit contrôleur de vidéo (6) capables chacun et alternativement de mémoriser un dixième de seconde d'images. Enfin un tampon respectif (46, 36, 26) est associé à chacun des circuits de contrôleur de communication(4), d'interface d'entrée (3) et de mémorisation (2).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité

Les données audiovisuelles numérisées et compressées sont stockées dans les moyens de mémorisation (21).

Chaque sélection est disponible selon deux formats numérisés: avec une qualité hi-fi ou une qualité CD.

Le système d'exploitation multitâches constitue l'élément essentiel pour permettre l'exécution simultanée de multiples fragments de codes et pour gérer les priorités entre les différentes tâches qui se réveillent

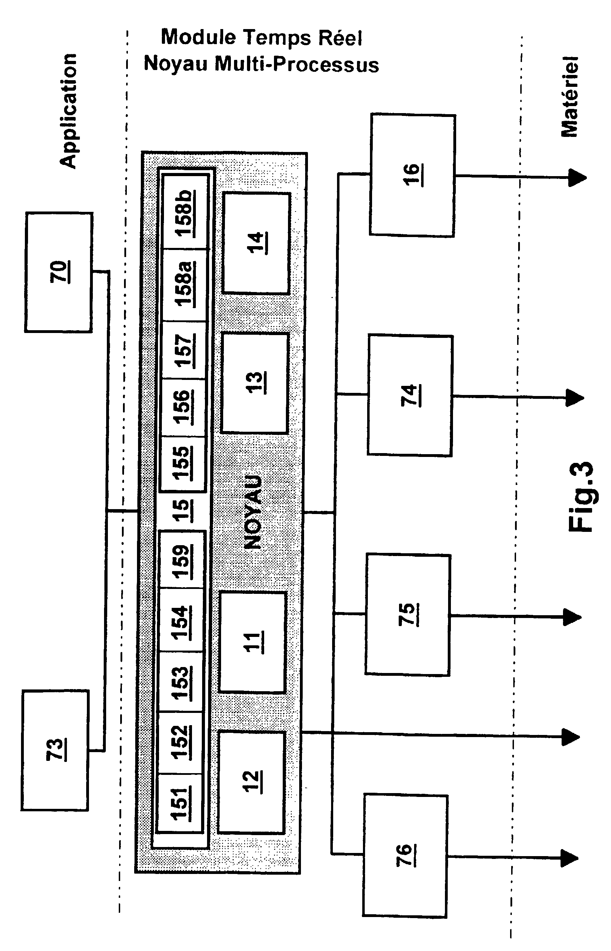

Ce système d'exploitation multitâche est organisé, comme représenté à la figure 3, autour d'un noyau comportant un module (11) de résolution des priorités entre tâches, d'un module (12) superviseur des tâches, d'un module (13) de sérialisation du matériel utilisé et un module (14) de communication des processus. Chacun des modules communique avec des interfaces (15) de programmation des applications et la base de donnée (16). Il y a autant d'interface de programmation qu'il y a d'applications. Ainsi le module (15) comporte une première interface (151) de programmation pour le commutateur à clé (32), une deuxième interface (152) de programmation pour la commande à distance (31), une troisième interface (153) de programmation pour l'écran tactile (33), une quatrième interface (154) de programmation pour le clavier (34) une cinquième interface (155) de programmation pour le dispositif de paiement (35), une sixième interface (156) de programmation pour le circuit de contrôle du son (5), une septième interface (157) de programmation pour le circuit (6) de contrôle de la vidéo, une huitième interface (159) pour le circuit de contrôle de la vidéo du réseau câblé et une dernière interface (158a) pour le circuit (4) de contrôle des télécommunications et (158b) pour le circuit de contrôle des communications avec le PABX (10).

Cinq tâches ayant un ordre de priorité décroissant sont gérées par le noyau (kernel) du système d'exploitation, la première (76) pour les entrées sorties vidéo a la priorité la plus élevée, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (11) de résolution des priorités au fur et à mesure de l'apparition ou de la disparition d'une tâche. Ainsi dès qu'une tâche vidéo apparaît, les autres tâches en cours d'exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse (21) alternativement vers l'un des deux tampons (66, 67) tandis que l'autre tampon (67, respectivement 66) est utilisé par le circuit (6) contrôleur de vidéo pour produire l'affichage après décompression des données. En entrée la tâche vidéo (76) a pour objet de transférer les données reçues dans le tampon de télécommunication (46) vers la mémoire de masse (21). Il en est de même pour la tâche son (75), d'une part en entrée entre le tampon de télécommunication (46) et le tampon (26) de la mémoire de masse (21)et d'autre part en sortie entre le tampon (26) de la mémoire de masse (21) et l'un des deux tampons (56, 57) du circuit (5) contrôleur de son.

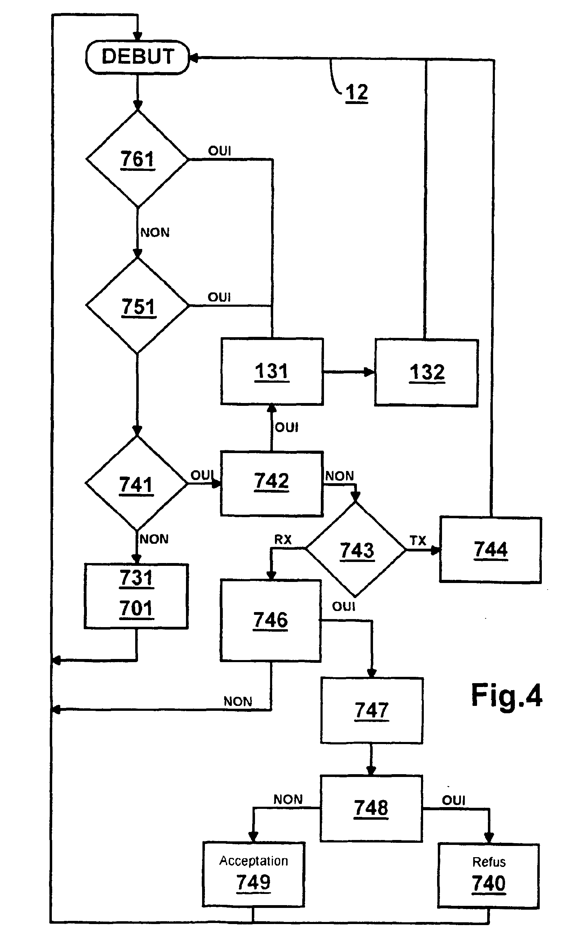

Le module superviseur de tâche (12) va maintenant être décrit en liaison avec la figure 4. Ce module effectue dans l'ordre de priorité un premier test (761) pour déterminer si la tâche vidéo est active, c'est à dire si un des tampons vidéo (66, 67) est vide. Dans le cas où la réponse est négative le module superviseur de tâche passe au test suivant qui est un second test (751) pour déterminer si la tâche son est active, c'est à dire si un des tampons (56, 57) est vide. En cas de réponse négative un troisième test (741) détermine si la tâche communication est active, c'est à dire si le tampon (46) est vide. Après une réponse affirmative à l'un des test, le module superviseur de tâche (12) remplit à l'étape (131) la file de requête (13) d'accès mémoires et exécute à l'étape (132) cette requête en lecture ou en écriture entre la mémoire de masse (21) et le tampon correspondant à la tâche active, puis reboucle sur le premier test. Lorsque le test (741) sur l'activité d'une communication est affirmatif le superviseur (12) effectue un test (742) pour déterminer s'il s'agit de lire ou d'écrire de l'information en mémoire. Si oui la requête d'écriture ou de lecture est mise dans la file à l'étape (131). Dans le cas contraire le superviseur détermine à l'étape (743) s'il s'agit d'une transmission ou d'une réception et dans le cas d'une transmission envoie par l'étape (744) le bloc d'information au serveur central. Dans le cas d'une réception le superviseur vérifie à l'étage (746) que les tampons du noyau sont libres d'accès et dans l'affirmative envoie un message au serveur central pour accepter la réception d'un bloc de donnée à l'étape (747). Après la réception d'un bloc, un contrôle d'erreur (748) est effectué du type de redondance cyclique CRC (cyclic redundant check). Le bloc est refusé à l'étape (740) en cas d'erreur, ou accepté dans le cas contraire, par l'envoi d'un message correspondant au serveur central signifiant que le bloc portant un numéro déterminé est refusé ou accepté, puis reboucle sur les tests de départ dans le cas ou aucune tâche de niveau supérieur est active le superviseur effectue à l'étape (731 ou 701) le traitement des tâches d'interface ou de gestion.

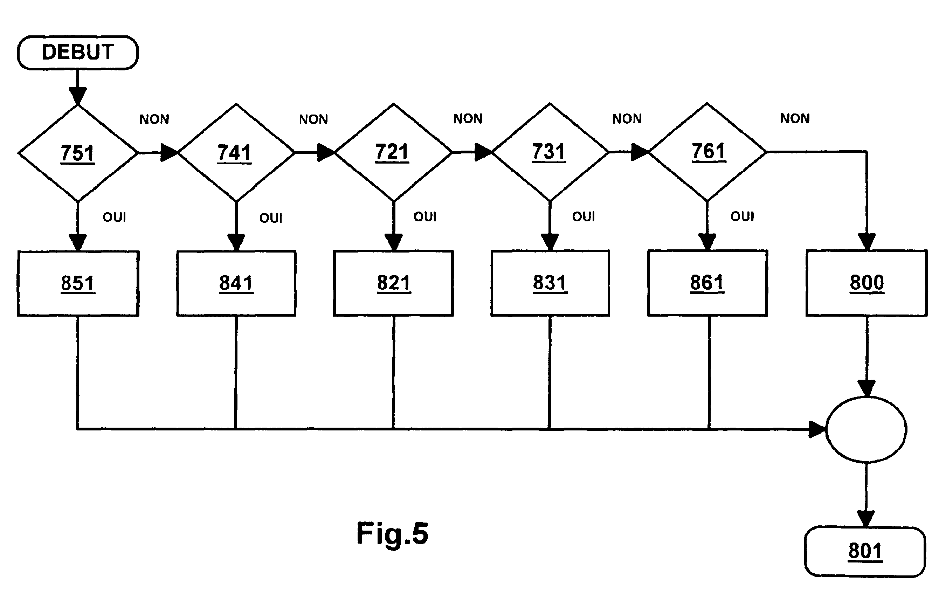

La détection d'une tâche active ou prête se fait comme représenté à la figure 5 par un test respectivement (721 à 761) sur chacun des tampons matériels ou logiciels respectifs (26) du disque dur, (36) d'interface, (46) de télécommunication, (56 et 57) de son, (66 et 67) de la vidéo qui sont associé avec chacun des circuits contrôleurs respectifs (2, 3, 4, 5, 6) de chacun des dispositifs matériels associés à l'unité centrale (1). Le test (721) permet de voir si les données sont présentes dans le tampon de mémoire d'entrée et sortie du disque, le test (731) permet de voir si des données sont présentes dans les tampons mémoires hardware ou software du dispositif d'interface client, le test (741) permet de voir si des données sont présentes dans les tampons en mémoire software ou hardware du dispositif télécommunication, le test (751) permet de déterminer si des données sont présentes dans le tampon en mémoire hardware ou software pour le sens, le test (761) permet de voir si des données sont présentes dans les tampons mémoires hardware ou software du dispositif vidéo. Si un ou plusieurs de ces tampons sont remplis de données le superviseur (12) positionne le ou les tampons de statut respectifs (821) pour le disque dur, (831) pour l'interface, (841) pour les télécommunications, (851) pour le son, (861) pour la vidéo correspondant au matériel à un état logique illustratif de l'activité. Dans le cas contraire les tampons de statut du superviseur sont remis à l'étape (800) à une valeur illustrative de l'inactivité.

Le statut d'opération du système est maintenu sur disque dur.

A chaque fois qu'un événement notable est déclenché, le système l'enregistre immédiatement sur le disque.

Ainsi, dans l'éventualité où surviendrait une panne électrique ou encore un bris d'équipement, le système sera en mesure de redémarrer exactement au même endroit où il a été interrompu.

Les événements qui engendrent la sauvegarde du statut à opération sont :
- entrée d'argent (l'ajout de crédits) ;
- l'ajout d'une sélection dans la file d'attente ;
- la fin d'une sélection (changement de la sélection présentement en écoute).

Le fichier est dans un format machine seulement lisible par l'unité et ne prend pas plus de 64 octets.

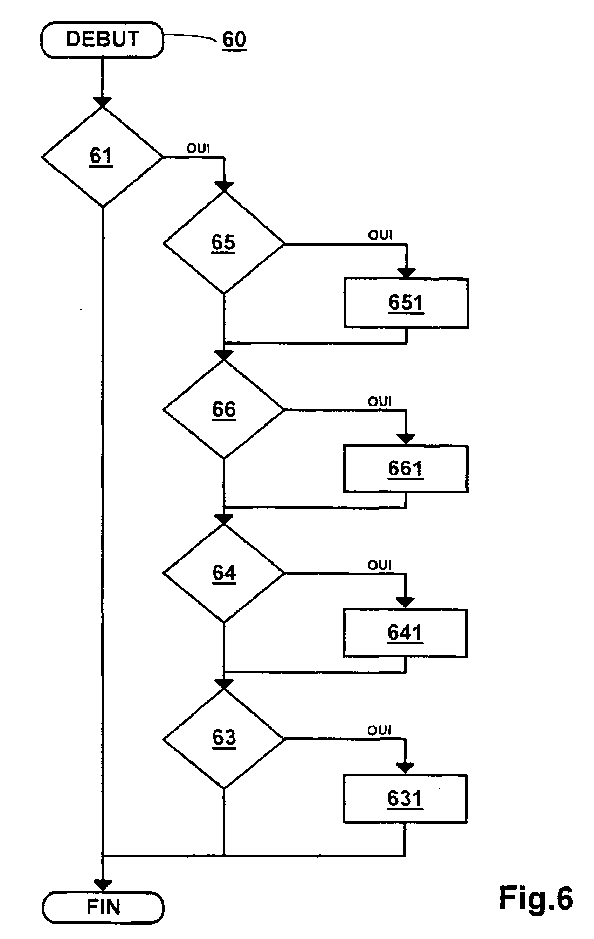

Le nombre et le type de tâches actives est indiqué au superviseur (12) par l'exécution du module de gestion des sélections dont le logigramme est représenté à la figure 6. La gestion effectuée par ce module commence par un test (61) pour déterminer si des sélections sont en attente dans la file.

Par la suite si le test (61) sur la file d'attente détermine que des sélections sont en attente, quand un client sélectionne un titre qu'il désire entendre, celui-ci est automatiquement écrit dans un fichier de file d'attente du système sur le disque dur.

Ainsi, chaque sélection faite ne sera jamais perdue en cas de panne électrique. Le système joue (reproduit) la sélection en entier avant de la retirer du fichier de la file d'attente.

Quand la sélection a été reproduite en entier, elle est retirée du fichier de file d'attente et est écrite dans le fichier de statistiques du système avec la date et l'heure d'achat, ainsi que la date et l'heure auxquelles elle a été exécutée.

Immédiatement après le transfert au fichier de statistiques de la sélection terminée, le système vérifie s'il y en a d'autres dans le fichier d'attente. S'il y en a une autre, le système commence immédiatement à jouer la sélection.

Le temps total écoulé entre la fin d'une sélection et le début de la suivante est inférieur à 0,5 seconde.

Il est possible d'allonger ce délai grâce à un bouton situé dans le panneau de contrôle du système.

Le traitement se poursuit par un test (65) pour déterminer si la sélection contient un scénario audio. Si oui, ce scénario est inscrit à l'étape (651) dans la file des tâches du superviseur (12). Si non, ou après cette inscription le traitement se poursuit par un test (66) pour déterminer si la sélection contient des images animées. Dans l'affirmative le scénario de la vidéo est inscrit à l'étape (661) dans la file des tâches du superviseur (12). Si non ou dans l'affirmative après cette inscription, le traitement se poursuit par un test (64) pour déterminer si la sélection contient un graphique fixe. Dans l'affirmative le scénario de la présentation graphique est inscrit à l'étape (641) dans la file des tâches du superviseur (12). Si non ou dans l'affirmative après cette inscription le traitement se poursuit par un test (63) pour déterminer si la sélection contient un scénario de publicité. Dans l'affirmative le scénario est inscrit à l'étape (631) dans la file des tâches du superviseur (12). Ainsi le superviseur (12) informé des tâches ouvertes peut gérer le déroulement des tâches simultanément.

Du fait d'une part du mode de gestion multitâches et d'autre part de la présence de tampons matériels ou logiciels affectés à chacune des tâches pour mémoriser temporairement des données il est possible de rajouter les tâches de gestion des modules contrôleurs vidéo pour le réseau coaxial et d'une interface avec le central téléphonique des locaux sans avoir à modifier fondamentalement le fonctionnement d'un juke-box selon l'invention. En outre l'exploitation du réseau téléphonique associé à l'exploitation du réseau coaxial câblé dans les locaux permet de diffuser de la musique par le procédé de l'invention sans avoir à introduire de modifications importantes dans le câblage des locaux et dans le dispositif permettant la mise en place du système.

En effet, en fonctionnement, un utilisateur, par exemple de la chambre CH1, va prendre son combiné T1 et appeler un numéro déterminé correspondant à un numéro de chambre fictif affecté à l'exploitation et à la sélection des informations à diffuser sur le réseau coaxial. Lorsque le PABX reconnaît ce numéro il envoie un signal à l'interface (8) du juke-box (1) qui déclenche une tâche de sélection des pièces audio et vidéo à diffuser. Cette tâche de sélection déclenche l'émission sur le réseau coaxial des informations permettant un affichage correspondant à des fenêtres de présentation comportant des cases de sélection actionnées par un curseur mobile déplacé par l'actionnement de certaines touches du clavier téléphonique. Une interface logiciel interprète les fréquences vocales des touches du téléphone actionnées pour les transformer en événements souris interprétables par le système d'exploitation du juke-box de façon à provoquer en liaison avec ces touches actionnées un déplacement d'un marqueur sur les fenêtres présentées sur les écrans de télévision. Ce marqueur est amené sur des boutons de validation de la sélection en vue de la confirmation de la sélection par l'actionnement d'une touche du clavier du téléphone spécifique à cette action. La sélection ainsi faite par l'utilisateur dans sa chambre par utilisation du téléphone et de l'écran de télévision sera prise en compte dans la file des requêtes du juke-box au même titre que les autres sélections effectuées sur l'écran tactile du juke-box et sera interprétée et envoyée sur le réseau câblé le moment venu de façon à être diffusée sur tous les récepteurs de télévision de l'immeuble. Par ailleurs lors de la communication téléphonique le central PABX a envoyé un numéro d'identification de la chambre au juke-box. Ce dernier renvoie par l'intermédiaire du PABX au système de facturation, le numéro de la chambre ainsi que le coût de la ou des sélections effectuées de façon à ce que l'utilisateur soit directement facturé pour ses consommations de pièces musicales ou vidéo.

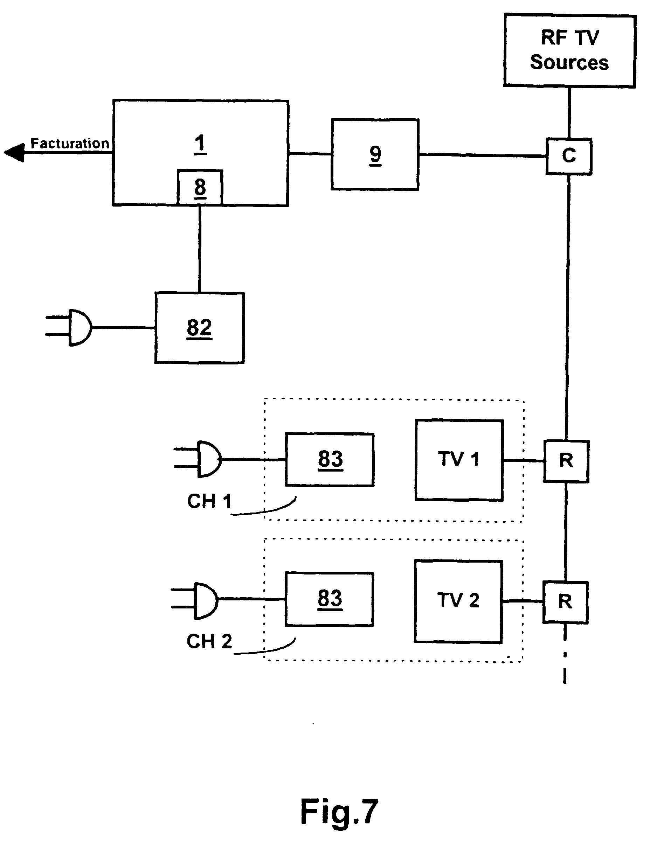

Enfin le dispositif représenté à la figure 7 constitue une autre variante de la présente invention dans laqu elle on retrouve le réseau câblé avec ces répartiteurs (R), son coupleur (C) et ses différents postes de télévision (TV1, TV2), reliés par le coupleur (C) à un modulateur de fréquence radio (9) lui-même relié au sortie vidéo (V2) et audio stéréo du juke-box (1). Le juke-box (1) comporte une interface (81) reliée à un boîtier (82) branché sur le secteur d'alimentation électrique. Ce boîtier (82) a pour but d'extraire du courant les informations de commande superposées au courant porteur. Ces informations de commande sont transmises par un boîtier de commande (83) lui-même relié au secteur par une prise électrique. Le boîtier de commande comporte soit un dispositif de type souris ou de type à boule de commande (trackball) ou de type manche à balai (joystick) avec un bouton de validation pour activer à chaque fois le bouton de présentation de l'écran sur lequel le curseur ou le marqueur est amené par l'intermédiaire de l'élément de déplacement de type manche à balai ou boule de commande ou souris.

## Revendications

1. Système de distribution et de sélection d'informations audio et vidéo sur un réseau coaxial câblé comportant en association une unité juke-box (1) reliée par un modulateur (9) à ce réseau câblé de distribution de la télévision **caractérisé en ce qu'**il comporte un canal affecté à la transmission des informations audio ou vidéo ;
des moyens **reliés à un réseau distinct du réseau câblé** interactifs (T1, 83) avec le téléviseur de sélection à distance d'au moins une information audio ou vidéo **du juke-box** parmi la pluralité d'informations à transmettre sur le réseau câblé par ce canal ;
des moyens d'identification des moyens de sélection ou du poste de télévision associé aux moyens de sélection;
des moyens de facturation de l'utilisateur associé à un poste de télévision pour les sélections consommées.

2. Système de distribution et de sélection d'informations audio et vidéo selon la revendication 1, **caractérisé en ce que** les moyens de sélection sont constitués par le réseau téléphonique (T1) et le central (10) associé de type PABX qui délivre à une interface (8) du juke-box des signaux de fréquences vocales exploités par un logiciel d'interface incorporé au juke-box (1) pour interpréter l'enfoncement des touches d'un poste téléphonique (T1) comme des événements souris influençant le déplacement d'un marqueur sur des fenêtres d'écran permettant de guider l'utilisateur, lesdits signaux comprenant également une information d'identification.

3. Système de distribution et de sélection d'informations audio et vidéo selon la revendication 1 ou 2, **caractérisé en ce que** des moyens d'assistance vocale sont prévus pour guider l'utilisateur dans l'actionnement des touches du poste téléphonique (T1).

4. Système de distribution et de sélection d'informations audio et vidéo selon la revendication 1, **caractérisé en ce que** les moyens de sélections sont constitués par un moyen de commande (83) relié par le réseau électrique à une interface (81) appropriée du juke-box, ladite interface et les moyens de sélection fonctionnant tout deux sur les principes des courants porteurs pour transmettre une information d'identification et les informations de commande correspondant à l'enfoncement des touches de la commande.

5. Système de distribution et de sélection d'informations audio et vidéo selon une des revendications 1 à 3, **caractérisé en ce que** le juke-box comporte des moyens de mémorisation de masse (21), un processeur principal exploitant un système multitâches, un circuit contrôleur vidéo (7) propre au réseau câblé, ledit circuit contrôleur vidéo et la carte contrôleur son (5) étant reliés à un modulateur (9) de fréquence radio et une interface (8) d'entrée et sortie pour les moyens de sélection à distance.

6. Système de distribution et de sélection d'informations audio et vidéo selon la revendication 5, **caractérisé en ce que** le juke-box comporte un écran (33) tactile et une interface (153) spécifique à l'écran tactile, un circuit contrôleur son (5) et un circuit contrôleur vidéo (6) d'un dispositif d'affichage propre au juke-box.

7. Système de distribution et de sélection d'informations audio et vidéo selon la revendication 5 ou 6, **caractérisé en ce que** le juke-box (1) comporte des moyens monnayeurs (35).

8. Système de distribution et de sélection d'informations audio et vidéo selon une des revendications 5 à 7, **caractérisé en ce que** les moyens de facturation exploitent une base de donnée du juke-box associant au titre sélectionné le coût de la sélection et délivrant à un système de facturation, un identifiant de l'utilisateur ainsi que le montant à lui facturer.

9. Système de distribution et de sélection d'informations audio et vidéo selon une des revendications précédentes, **caractérisé en ce que** l'écran de télévision permet l'affichage d'un tableau de sélection de titres permettant le choix de sélections soit par accès direct du titre ou de l'interprète, soit par la catégorie et sélection dans une liste de la catégorie.

10. Procédé d'utilisation d'un système de distribution et de sélection d'informations audio et vidéo constitué d'un réseau câblé de distribution de la télévision auquel est raccordé par un modulateur RF et une carte contrôleur son et une carte contrôleur vidéo une unité juke-box, ladite unité juke-box étant elle-même reliée à un autre réseau soit téléphonique soit électrique par une interface, **caractérisé en ce que** ledit procédé comporte les étapes :
- d'envoi d'un identifiant du local associé au poste de télévision par soit une ligne téléphonique soit une commande à distance ;
- une étape de sélection d'informations audio ou vidéo à exécuter sur le réseau par l'utilisation d'un clavier et d'une interface interprétant les touches du clavier comme des touches de déplacement d'un curseur ;
- une étape de mise dans la file d'attente du juke-box de l'ordre de sélection et d'exécution de l'information audio ou vidéo sélectionnée ;
- une étape d'envoi sur le réseau câblé de cette information ;
- une étape d'envoi dès la validation de la sélection des informations concernant l'identification de l'utilisateur et le coût de la sélection à un système de facturation.

## Patentansprüche

1. System zum Verteilen und Wählen von Audio- und Videoinformationen in einem Koaxialkabel-Netz, dem eine Jukebox-Einheit (1), die über einen Modulator (9) an dieses Fernsehverteilungs-Kabelnetz angeschlossen ist, zugeordnet ist, **dadurch gekennzeichnet, dass** es enthält: einen Kanal, der der Übertragung von Audio- oder Videoinformationen zugewiesen ist;
Mittel (T1, 83), die mit einem vom Kabelnetz getrennten Netz verbunden sind und mit dem Fernsehgerät für die Fernwahl wenigstens einer Audio-oder Videoinformation der Jukebox-Einheit aus den mehreren auf diesem Kanal im Kabelnetz zu übertragenden Informationen in Dialog stehen;
Mittel zum Identifizieren von Wählmitteln oder des den Wählmitteln zugeordneten Fernsehgeräts;
Mittel, die dem dem Fernsehgerät zugeordneten Benutzer die jeweils verbrauchte Auswahl in Rechnung stellen.

2. System zum Verteilen und Wählen von Audio- und Videoinformationen nach Anspruch 1, **dadurch gekennzeichnet, dass** die Wählmittel durch das Telephonnetz (T1) und die zugeordnete Zentrale (10) des Typs PABX gebildet sind, welche an eine Schnittstelle (8) der Jukebox Sprachfrequenzsignale liefert, die von einer in die Jukebox (1) eingebauten Schnittstellen-Software ausgewertet werden, um das Drücken von Tasten eines Telephonapparats (T1) als Maus-Ereignisse zu interpretieren, die die Bewegung eines Cursors in Bildschirmfenstern beeinflussen, so dass der Benutzer geführt werden kann, wobei die Signale außerdem eine Identifizierungsinformation enthalten.

3. System zum Verteilen und Wählen von Audio- und Videoinformationen nach Anspruch 1 oder 2, **dadurch gekennzeichnet, dass** Sprachunterstützungsmittel vorgesehen sind, um den Benutzer bei der Betätigung der Tasten des Telephonapparats (T1) zu führen.

4. System zum Verteilen und Auswählen von Audio- und Videoinformationen nach Anspruch 1, **dadurch gekennzeichnet, dass** die Wählmittel durch ein Steuermittel (83) gebildet sind, das über das Stromnetz mit einer geeigneten Schnittstelle (81) der Jukebox verbunden ist, wobei die Schnittstelle und die Wählmittel beide gemäß den Trägerstrom-Prinzipien arbeiten, um eine Identifizierungsinformation und die Steuerinformationen, die dem Drücken von Tasten für einen Befehl entsprechen, zu übertragen.

5. System zum Verteilen und Wählen von Audio- und Videoinformationen nach einem der Ansprüche 1 bis 3, **dadurch gekennzeichnet, dass** die Jukebox Massenspeichermittel (21), einen ein Multitasking-System benutzenden Hauptprozessor, eine zum Kabelnetz gehörende Video-Controllerschaltung (7), die ebenso wie die Ton-Controllerkarte (5) mit einem Funkfrequenz-Modulator (9) verbunden ist, sowie eine Eingangs- und Ausgangsschnittstelle (8) für die Fernwahlmittel enthält.

6. System zum Verteilen und Wählen von Audio- und Videoinformationen nach Anspruch 5, **dadurch gekennzeichnet, dass** die Jukebox einen Tastschirm (83) und eine für den Tastschirm spezifische Schnittstelle (153), eine Ton-Controllerschaltung (5) und eine Video-Controllerschaltung (6) einer zur Jukebox gehörenden Anzeigevorrichtung enthält.

7. System zum Verteilen und Wählen von Audio- und Videoinformationen nach Anspruch 5 oder 6, **dadurch gekennzeichnet, dass** die Jukebox (1) Münzenhandhabungsmittel (35) enthält.

8. System zum Verteilen und Wählen von Audio- und Videoinformationen nach einem der Ansprüche 5 bis 7, **dadurch gekennzeichnet, dass** die Fakturierungsmittel eine Datenbank der Jukebox benutzen, die dem gewählten Titel die Kosten der Wahl zuordnet und an ein Fakturierungssystem eine Kennung des Benutzers sowie den ihm in Rechnung zu stellenden Betrag liefert.

9. System zum Verteilen und Wählen von Audio- und Videoinformationen nach einem der vorangehenden Ansprüche, **dadurch gekennzeichnet, dass** der Fernschschirm die Anzeige einer Titelwahl-Tabelle ermöglicht, die eine Wahl entweder durch direkten Zugriff auf den Titel oder den Interpreten oder durch die Kategorie und die Wahl in einer Liste der Kategorie ermöglicht.

10. Verfahren zum Verwenden eines Systems zum Verteilen und Wählen von Audio- und Videoinformationen, das aus einem Fernsehverteilungs-Kabelnetz gebildet ist, mit dem über einen HF-Modulator und eine Ton-Controllerkarte sowie eine Video-Controllerkarte eine Jukebox-Einheit angeschlossen ist, welche ihrerseits über eine Schnittstelle mit einem anderen Netz, entweder einem Telephonnetz oder einem Stromversorgungsnetz, verbunden ist, **dadurch gekennzeichnet, dass** das Verfahren die folgenden Schritte enthält:
- Schicken einer Kennung des Ortes, der dem Fernsehgerät zugeordnet ist, entweder über eine Telephonleitung oder Ober eine Fernsteuerung;
- einen Schritt der im Netz auszuführenden Wahl von Audio- oder Videoinformationen durch Verwenden einer Tastatur und einer Schnittstelle, die die Tasten der Tastatur als Bewegungstasten für einen Cursor interpretiert;
- einen Schritt, in dem die ausgewählte Audio- oder Videoinformation in der Reihenfolge der Wahl und der Ausführung in eine Warteschlange der Jukebox eingereiht wird;
- einen Schritt des Schickens dieser Information im Kabelnetz;
- einen Schritt des Schickens von Informationen, die die Identifizierung des Benutzers und die Kosten der Wahl betreffen, an ein Fakturierungssystem, sobald die Wahl für gültig erklärt wird.

## Claims

1. System for distributing and selecting audio and video information on a coaxial cable network comprising, in association, a juke-box unit (1) connected by a modulator (9) to this cable television distribution network, **characterised in that** it comprises a channel assigned to the transmission of audio or video information;
means (T1, 83) connected to a network distinct from the cable network, interactive with the television set, for remotely selecting at least one piece of audio or video information of the juke-box from among the plurality of pieces of information to be transmitted over the cable network by this channel;
means for identifying the selection means or the television set associated with the selection means; means for billing the user associated with a television set for the selections consumed.

2. System for distributing and selecting audio and video information according to Claim 1, **characterised in that** the selection means are constituted by the telephone network (T1) and the associated PABX-type switchboard (10), which delivers to an interface (8) Of the juke box voice-frequency signals used by a piece of interface software incorporated in the juke-box (1) in order to interpret the pressing of the keys of a telephone set (T1) as mouse events influencing the displacement of a marker over the screen windows allowing the user to be guided, said signals also comprising identification information.

3. System for distributing and selecting audio and video information according to claim 1 or 2, **characterised in that** voice assistance means are provided in order to guide the user in actuating the keys of the telephone set (T1).

4. System for distributing and selecting audio and video information according to claim 1, **characterised in that** the selection means are constituted by a control means (83) connected via the electrical network to an appropriate interface (81) of the juke-box, said interface and the selection means both functioning on the principles of carrier currents in order to transmit identification information and control information corresponding to the pressing of the control keys.

5. System for distributing and selecting audio and video information according to one of claims 1 to 3, **characterised in that** the juke-box comprises bulk memory means (21), a main processor operating a multitask system, a video controller circuit (7) specific to the cable network, said video controller circuit and the sound controller card (5) being connected to a radio frequency modulator (9) and an input and output interface (8) for the remote selection means.

6. System for distributing and selecting audio and video information according to claim 5, **characterised in that** the juke-box comprises a touch-sensitive screen (33) and an interface (153) specific to the touch-sensitive screen, a sound controller circuit (5) and a video controller circuit (6) of a display device specific to the juke-box.

7. System for distributing and selecting audio and video information according to claim 5 or 6, **characterised in that** the juke-box (1) comprises payment means (35).

8. System for distributing and selecting audio and video information according to one of claims 5 to 7, **characterised in that** the billing means use a database of the juke-box associating with the selected title the cost of the selection and delivering to the billing system a user identifier and also the amount to be billed to him.

9. System for distributing and selecting audio and video information according to one of the preceding claims, **characterised in that** the television screen permits the display of a title selection table allowing the choice of selections either by direct access to the title or the performer, or by the category and selection from a list in the category.

10. Method for using a system for distributing and selecting audio and video information constituted by a cable television distribution network to which a juke-box unit is connected via an RF modulator and a sound controller card and a video controller card, said juke-box unit itself being connected to another network, either telephone or electrical, via an interface, **characterised in that** said method comprises the stages:
- sending an identifier for the premises associated with the television set via either a telephone line or a remote control;
- a stage of selecting audio or video information to be performed on the network by using a keyboard and an interface interpreting the keys of the keyboard as the keys for displacing a cursor;
- a stage of placing in the queue of the juke-box the order to select and perform the audio or video Information selected;
- a stage of sending this information over the cable network;
- a stage of sending information concerning the user identification and the cost of selection to a billing system, once the selection has been validated.
